Europäisches Patentamt

European Patent Office

Office européen des brevets

(19)

(11) Veröffentlichungsnummer: **0 076 390**

**A1**

(12)

# EUROPÄISCHE PATENTANMELDUNG

(21) Anmeldenummer: **82108144.5**

(22) Anmeldetag: **03.09.82**

(51) Int. Cl.³: **B 23 K 9/32**

(30) Priorität: **28.09.81 DE 3138527**

(43) Veröffentlichungstag der Anmeldung:
**13.04.83 Patentblatt 83/15**

(84) Benannte Vertragsstaaten:
**CH FR GB IT LI**

(71) Anmelder: **MESSER GRIESHEIM GMBH**
**Patentabteilung Hanauer Landstrasse 330**
**D-6000 Frankfurt/Main 1(DE)**

(72) Erfinder: **Auer, Rupert**
**Kleiststrasse 10**
**D-8057 Eching(DE)**

(72) Erfinder: **Buchbauer, Christian**
**Scheidegger Ring 4**
**D-8059 Langenpreising(DE)**

(54) **Einrichtung zum Schutzgas-Lichtbogenschweissen mit abschmelzender Drahtelektrode.**

(57) Eine derartige Einrichtung weist eine Schweißstromquelle (11) und einen Schweißbrenner auf, der über ein
Schlauchpaket (12) an die Schweißstromquelle (11) anschließbar ist, wobei im Schlauchpaket (12) als Elektrodendrahtführung eine Drahtspirale (20) vorgesehen ist, die von einer
gleichmittig angeordneten Schutzgasführung so umgeben
ist, daß das Schutzgas in einem von Drahtspirale (20) und
Schutzgasführung gebildeten Ringspalt (18) zuführbar ist.

Um einen Gasverlust bei gleichzeitiger kostengünstiger
Ausgestaltung der Einrichtung zum Schutzgas-Lichtbogenschweißen (10) zu vermeiden, wird gemäß der Erfindung vorgeschlagen, daß die Außenoberfläche der Drahtspirale (20) auf ihrer ganzen Länge mit einer gasundurchlässigen Schicht (19) versehen ist.

FIG.1

Croydon Printing Company Ltd.

MESSER GRIESHEIM GMBH          MG 1289

Kennwort: Drahtspirale          EM     1000

Erfinder: Auer, Buchbauer          Ordner: VI

Einrichtung zum Schutzgas-Lichtbogenschweißen mit abschmelzender Drahtelektrode

Die vorliegende Erfindung bezieht sich auf eine Einrichtung zum Schutzgas-Lichtbogenschweißen mit abschmelzender Drahtelektrode, mit einer Schweißstromquelle und einem Schweißbrenner welcher über ein Schlauchpaket an die Schweißstromquelle anschließbar ist, wobei im Schlauchpaket als Elektrodendrahtführung eine Drahtspirale vorgesehen ist, die von einer gleichmittig angeordneten Schutzgasführung so umgeben ist, daß das Schutzgas in einem von Drahtspirale und Schutzgasführung gebildeten Ringspalt zuführbar ist.

Mit diesem Oberbegriff wird auf einen Stand der Technik bezug genommen wie er beispielsweise aus der DE-PS 15 40 860 bekannt geworden ist. Bei dieser bekannten Vorrichtung soll durch einen Nippel das Ausdringen von Schutzgas, an der
dem Schweißbrenner abgewandten Seite möglichst verhindert
werden. Die Praxis hat jedoch gezeigt, daß weiterhin
ein Schutzgasverlust auftritt. Dieser Schutzgasverlust ist
dadurch bedingt, daß infolge der wohl dicht aneinanderliegenden aber nicht formschlüssig miteinander verbundenen
Windungen der Drahtspirale Schutzgas zwischen den Winddungen hindurch in die Drahtführungsspirale hinein und
über diese, den Weg des geringsten Widerstandes folgend,
nicht zum Schweißbrenner, sondern in die Atmosphäre
strömen kann. Die Erfinder haben darüber hinaus festgestellt,
daß der Gasverlust bis zu 50 Prozent des zugeführten
Schutzgases beträgt, wodurch höhere Betriebsmittelkosten
hervorgerufen werden.

Aufgabe der vorliegenden Erfindung ist es, diesen Nachteil
der bekannten Vorrichtung zu vermeiden und eine Einrichtung
der eingangs beschriebenen Art zu schaffen, mit der ein
Schutzgasverlust unter kostengünstiger Ausgestaltung der
Einrichtung zum Schutzgas-Lichtbogenschweißen vermieden
wird.

Zur Lösung der Aufgabe wird erfindungsgemäß vorgeschlagen,
daß die Außenoberfläche der Drahtspirale auf ihrer ganzen
Länge mit einer gasundurchlässigen Schicht versehen ist.
Dadurch wird vorteilhaft im gesamten Schlauchpaket ein
Entweichen des Schutzgases durch die Drahtspirale verhindert
und damit der Gasverbrauch vermindert. Die gasundurchlässige
elastische Schicht wird bevorzugt durch umextrudieren
der Drahtspirale mit einem vorzugsweise thermoplastischen
Kunststoff aufgebracht. Dadurch wird eine besonders einfache, kostengünstige Ausgestaltung der Drahtspirale erreicht, die darüberhinaus eine sich auch bei mehrfachem
Biegen des Schlauchpaketes nicht lösende Verbindung zwischen
Drahtspirale und Schicht ergibt. Bei Verwendung einer
umextrudierten Drahtspirale als Führung für den Elektrodendraht in einem Schlauchpaket, insbesondere einem koaxial aufgebauten Schlauchpaket wird der Vorteil einer einfachen Schlauchpaketherstellung erreicht.

Weitere vorteilhafte Merkmale der erfindungsmäßigen Einrichtung sind in den Unteransprüchen gekennzeichnet und in der nachfolgenden Beschreibung eines bevorzugten Ausführungsbeispieles der Erfindung näher erläutert.

Es veranschaulicht:

Fig. 1 eine Einrichtung nach der Erfindung

Fig. 2 ein Schnitt längs der Linie A-A in Fig. 1

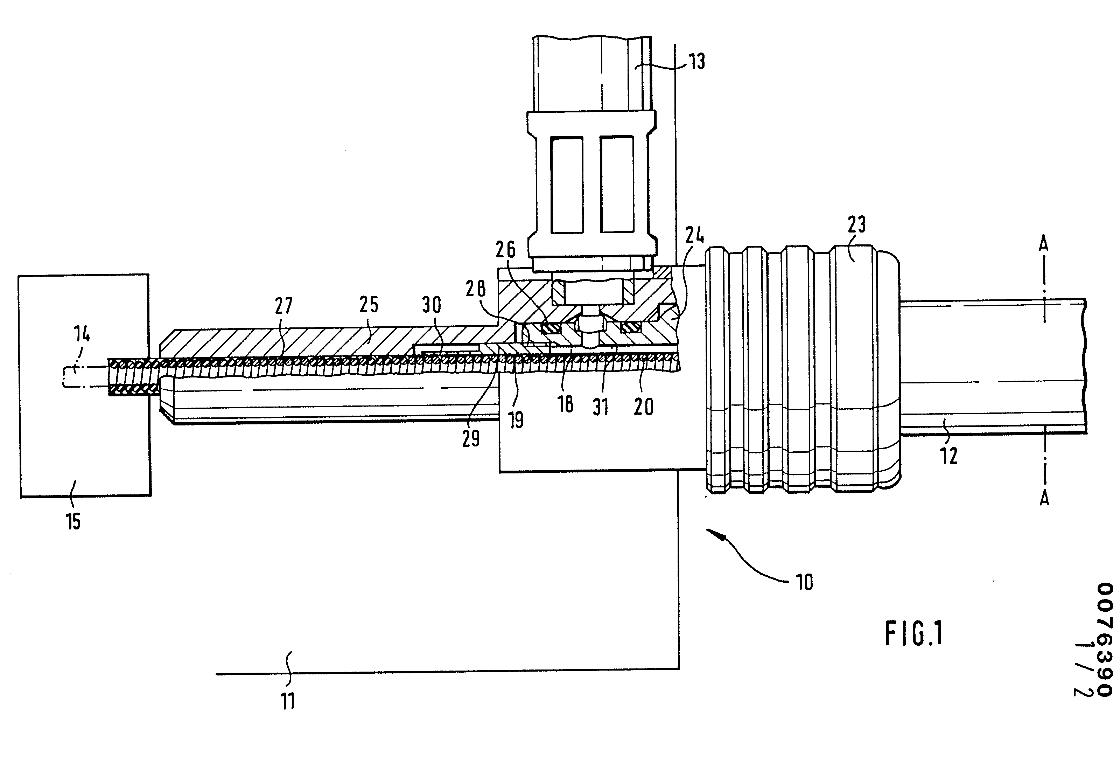

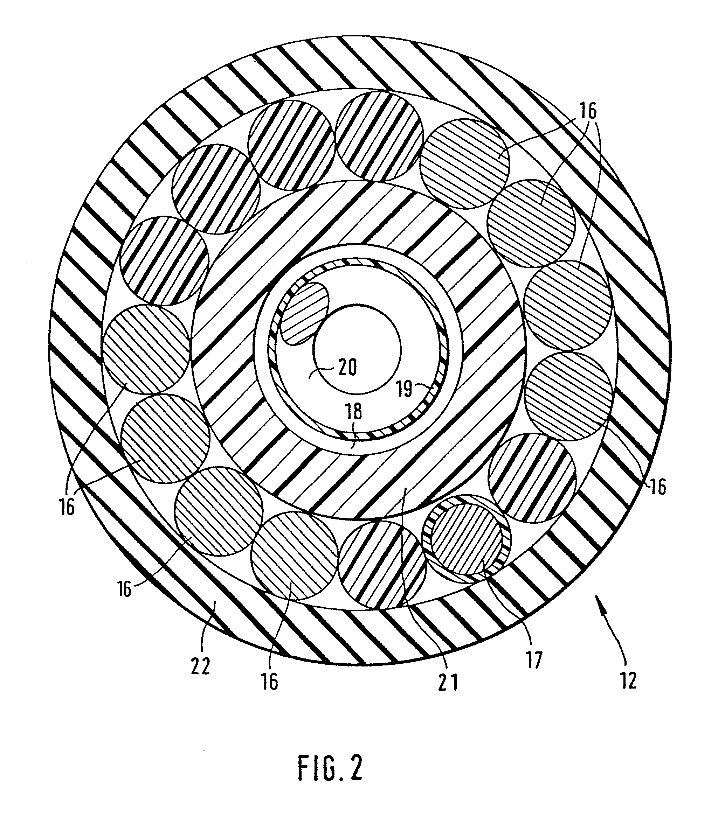

In Fig. 1 ist die Einrichtung zum Schutzgasschweißen mit abschmelzender Drahtelektrode in ihrer Gesamtheit mit 10 bezeichnet. Die Einrichtung 10 weist eine Schweißstromquelle 11 auf, die über ein koaxial aufgebautes Schlauchpaket 12 mit einem nicht dargestellten Schweißbrenner verbunden ist. Dabei wird Schutzgas und Schweißstrom über das Kabel 13 und die Drahtelektrode 14 über ein schematisch dargestelltes Drahtvorschubgerät 15 von der Schweißstromquelle 11 aus über das Schlauchpaket 12 dem Schweißbrenner zugeführt. Der koaxiale Aufbau des Schlauchpaketes 12 ist in Fig. 2 näher veranschaulicht. Die Schweißstromleitung ist mit 16, die Steuerleitung ist mit 17, der als Schutzgasführung dienende Ringspalt ist mit 18, die gasundurchlässige, elastische Schicht ist mit 19 und die Drahtspirale ist mit 20 bezeichnet. Die Isolierung der Schweißstromleitung 16 erfolgt durch den Außenmantel 22 und durch das PA-Rohr 21.

Dieses Schlauchpaket 12 ist über eine Schnellverschlußkupplung 23 an die Schweißstromquelle 11 anschließbar. Wie Fig. 1 zeigt, ist der am Ende des koaxial aufgebauten Schlauchpaketes ausgbildete Kupplungszapfen 24 gegenüber einer in der Schweißstromquelle 11 vorgesehenen Kupplungsbuchse 25 gegen Schutzgasaustritt durch zwei O-Ringe 26 abgedichtet. Das Schutzgas kann somit ohne Leckverluste vom Kabel 13 in den der Schutzgasführung dienenden Ringspalt 18 zugeführt werden. Der Ringspalt 18 wird durch die äußere Mantelfläche 27 der Drahtspirale 20 und der inneren Mantelfläche 31 des Kupplungszapfens 24 gebildet. Der Kupplungszapfen 24 ist mit einem Innengewinde 28 versehen. In das Innengewinde 28 ist ein Klemmstück 29 eingeschraubt, dessen Ende als Quetschhülse 30 ausgebildet ist. Die Hülse ist auf die gasunddurchlässige, elastische Schicht 19 der Drahtspirale geklemmt und dient als Dichtung gegen Ausdringen von Schutzgas aus dem Ringspalt 18 und auch gegen axiale Verschiebung der Drahtspirale 20.

Durch die auf die Drahtspirale aufgebrachte fest haftende Schicht 19 aus ursprünglich formlosen Stoff, vorzugsweise einem Kunststoff aus thermoplastischem Material, wie beispielsweise Polyamid durch vorzugsweise umextrudieren über die ganze Länge der Drahtspirale 20 wird ein Entweichen des Schutzgases über die Drahtspirale vermieden.

Die Erfindung soll nicht nur auf das bevorzugte, obige Ausführungsbeispiel mit einer lösbaren Verbindung zwischen Schweißstromquelle und einem koaxial aufgebauten Schlauchpaket beschränkt sein. Eine feste Verbindung des Schlauchpaketes mit der Schweißstromquelle verläßt ebenso wenig den Rahmen der Erfindung wie eine andere Herstellung (z.B. Spritzgießen, Tauchen) der gasundurchlässigen, elastischen Schicht.

Gr/Ha
23.9.1981
EM 1000
MG 1289

## Ansprüche

1. Einrichtung zum Schutzgas-Lichtbogenschweißen mit abschmelzbarer Drahtelektrode mit einer Schweißstromquelle und einem Schweißbrenner, der über ein Schlauchpaket an die Schweißstromquelle anschließbar ist, wobei im Schlauchpaket als Elektrodendrahtführung eine Drahtspirale vorgesehen ist, die von einer gleichmittig angeordneten Schutzgasführung umgeben ist, daß das Schutzgas in einem von Drahtspirale und Schutzgasführung gebildeten Ringspalt zuführbar ist, d a d u r c h   g e k e n n z e i c h n e t, daß die Außenoberfläche der Drahtspirale (20) auf ihrer ganzen Länge mit einer gasundurchlässigen, elastischen Schicht (19) versehen ist.

2. Einrichtung nach Anspruch 1, d a d u r c h   g e k e n n z e i c h n e t, daß die Schicht (19) durch umextrudieren der Drahtspirale (20) mit einem vorzugsweise thermoplastischen Kunststoff aufgebracht ist.

3. Einrichtung nach Anspruch 1, d a d u r c h   g e k e n n z e i c h n e t, daß der Ringspalt (18) an der Schweißbrenner abgewandten Seite des Schlauchpaketes durch ein in die Schutzgasführung (21) eingeschraubtes und auf der Drahtspirale (20) festgepreßtes Klemmstück (29) verschlossen ist.

4. Einrichtung nach Anspruch 1 g e k e n n z e i c h n e t   durch die Verwendung mit einer gasundurchlässigen elastischen, vorzugsweise umextrudierten Schicht (19) versehenen Drahtspirale (20) als Elektrodendrahtführung.

Gr/Ha
23.9.1981
EM 1000
MG 1289

FIG.1

FIG. 2

**Europäisches Patentamt**

# EUROPÄISCHER RECHERCHENBERICHT

**0076390**
Nummer der Anmeldung

| | EINSCHLÄGIGE DOKUMENTE | | EP 82108144.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 3 832 520 (GLASSER)<br>  * Fig. 4, Teil 74; Spalte 4, Zeile 58 - Spalte 5, Zeile 2 *<br>-- | 1 | B 23 K 9/32 |
| X | US - A - 3 544 758 (GUIDO)<br>  * Fig. 2, Teil 15; Spalte 3, Zeilen 12-30 *<br>-- | 1 | |
| A | AT - B - 265 823 (SIEMENS)<br>  * Gesamt *<br>-- | | |
| A | DE - A1 - 2 528 375 (INSTITUT PO SAVARJAVANE)<br>  * Fig. 1 *<br>-- | | **RECHERCHIERTE SACHGEBIETE (Int. Cl. ³)** |
| A | DE - B - 1 232 679 (SIEMENS)<br>  * Gesamt *<br>---- | | B 23 K 9/00 |

Der vorliegende Recherchenbericht wurde für alle Patentansprüche erstellt.

| Recherchenort | Abschlußdatum der Recherche | Prüfer |
|---|---|---|
| WIEN | 07-12-1982 | BENCZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument